# EUROPÄISCHE PATENTSCHRIFT

(11) **EP 3 137 406 B1**
(45) Veröffentlichungstag und Bekanntmachung des Hinweises auf die Patenterteilung: **02.05.2018**
(21) Anmeldenummer: 15708549.9
(22) Anmeldetag: 10.03.2015
(51) Int. Cl.: B66B 23/00, B66B 23/14

(54) **FAHRBAHNSYSTEM FÜR EINE FAHRTREPPE ODER EINEN FAHRSTEIG**
TRACKWAY SYSTEM FOR AN ESCALATOR OR MOVING WALKWAY
SYSTÈME DE VOIE POUR UN ESCALIER ROULANT OU UN TROTTOIR ROULANT

(30) Priorität: 30.04.2014 EP 14166527
(43) Veröffentlichungstag der Anmeldung: 08.03.2017
(73) Patentinhaber: Inventio AG, 6052 Hergiswil (CH)
(72) Erfinder: MATHEISL, Michael, A-2331 Vösendorf (AT); FRIM, Norbert, A-1120 Wien (AT); ILLEDITS, Thomas, A-2491 Neufeld (AT); HAUER, Uwe, 31582 Nienburg (DE); SCHULZ, Robert, A-1100 Wien (AT); BERGER, Michael, A-3433 Königstetten (AT); MAKOVEC, Christoph, A-2700 Wiener-Neustadt (AT)
(86) Internationale Anmeldenummer: PCT/EP2015/054966
(87) Internationale Veröffentlichungsnummer: WO 2015/165631

(56) Entgegenhaltungen:
- WO-A1-2013/103016
- WO-A1-2014/048809
- JP-A- 2003 137 488
- JP-A- 2006 327 792
- US-B1- 6 374 981

## Beschreibung

Die Erfindung betrifft eine Fahrtreppe mit einem Stufenband oder einen Fahrsteig mit einem Palettenband, ein Montageverfahren sowie ein Modernisierungsverfahren für Fahrtreppen und Fahrsteige. Die Fahrtreppe oder der Fahrsteig weisen in ihrer Längserstreckung seitlich des Stufenbandes oder Palettenbandes angeordnete Balustraden sowie einen ersten Umlenkbereich und einen zweiten Umlenkbereich auf. Das Palettenband beziehungsweise das Stufenband ist zwischen dem ersten Umlenkbereich und dem zweiten Umlenkbereich umlaufend angeordnet. Ferner beinhaltet die Fahrtreppe oder der Fahrsteig mindestens eine, zwischen den Umlenkbereichen angeordnete Laufschiene zur Führung des Stufenbandes oder Palettenbandes.

Fahrtreppen und Fahrsteige der vorgenannten Art weisen ein Tragwerk, beispielsweise ein Fachwerk auf, an und in dem die ortsfesten Komponenten wie Laufschienen, Lagerböcke und die Balustraden, sowie die bewegten Komponenten wie das Stufenband oder Palettenband, die Umlenkachse und Teile des Antriebes angeordnet sind.

In der EP 2 050 708 A2 wird beispielsweise ein Fahrsteig offenbart, dessen Tragwerk zwei Längsprofile beinhaltet, die sich in Längsrichtung des Fahrsteiges erstrecken. Die Längsprofile sind mittels Querstreben miteinander verbunden und bilden einen selbsttragenden, stabilen Rahmen. In den Längsprofilen sind Laufbahnen zur Führung des Stufenbandes ausgebildet. Ferner sind an den Längsprofilen Befestigungsbereiche für Füße und für Balustradenträger vorgesehen. Dieser Rahmen kann auch in mehrere Abschnitte beziehungsweise Rahmenmodule unterteilt sein, welche stirnseitig zusammenfügbar sind.

Die in der EP 2 050 708 A2 offenbarte Konstruktion weist die Nachteile auf, dass diese Längsprofile sehr biege- und torsionssteif ausgebildet sein müssen, da auf die Balustrade einwirkende, orthogonal zur Laufrichtung des Fahrsteiges gerichtete Querkräfte durch die senkrechten Abschnitte des Längsprofil-Querschnittes abgestützt werden müssen. Solche Querkräfte werden beispielsweise durch anlehnende Benutzer, durch Schläge auf die Balustrade und dergleichen verursacht und wirken aufgrund der üblichen Bauhöhe der Balustrade als hohe Biegemomente beziehungsweise Biegekräfte auf die Längsprofile. Die notwendige Biege- und Torsionssteifigkeit führt dazu, dass diese Längsprofile ein hohes Gewicht pro Laufmeter aufgrund eines großen Profilquerschnittes und einer großen Profilwandstärke aufweisen und dadurch die Handhabung sehr erschwert wird. Ferner sind solche Profile in der Herstellung und Verarbeitung sehr teuer und erfordern teure Produktionsmittel wie Presswerkzeuge, Pressmatrizen, Biegewerkzeuge, Montagelehren und Aufspannwerkzeuge.

In der WO 2014 048 809 A1 wird ein Fahrsteig offenbart, dessen Balustraden mittels Stützen an einer tragenden Struktur abgestützt sind und dessen Laufschienen an diesen Stützen befestigt sind. Diese aus Winkelprofilen gefertigten Stützen sind ausreichend steif für flachbauende Fahrsteige, welche niedrigen Belastungen ausgesetzt sind, wie sie beispielsweise im Einsatz in kleineren Kaufhäusern auftreten. Stützen von Fahrsteigen in öffentlichen Einrichtungen wie beispielsweise in Flughäfen müssen eine hohe Biege- und Knicksteifigkeit aufweisen, damit bei dichtbesetztem Palettenband die Stützen nicht deformiert werden. Dasselbe gilt auch für die in der WO 2014 048 809 A1 offenbarten Fahrtreppen, da die Stützen aufgrund ihrer Schrägstellung durch die abzustützende Masse der Laufschienen und gegebenenfalls die Masse der Balustraden auch auf Biegung beansprucht werden. Um die notwendige Knicksteifigkeit zu erreichen, müssen die in der WO 2014 048 809 A1 dargestellten Stützen aus Winkelprofilen für diese Einsatzgebiete daher sehr große Wandstärken aufweisen, was aber eine massive Gewichtserhöhung bedeuten würde.

Die Aufgabe der vorliegenden Erfindung ist daher, eine Fahrtreppe oder einen Fahrsteig der vorgenannten Art zu schaffen, deren Stützen außerordentlich präzise gefertigt, formstabil, knicksteif, kompakt in den Abmessungen, leicht herstellbar und kostengünstig sind und ein geringes Eigengewicht aufweisen.

Diese Aufgabe wird gelöst durch eine Fahrtreppe mit einem Stufenband oder durch einen Fahrsteig mit einem Palettenband, die einen ersten Umlenkbereich und einen zweiten Umlenkbereich aufweisen, wobei das Palettenband beziehungsweise das Stufenband zwischen dem ersten Umlenkbereich und dem zweiten Umlenkbereich umlaufend angeordnet ist. Außerdem weist die Fahrtreppe oder der Fahrsteig mindestens eine, zwischen den Umlenkbereichen angeordnete Laufschiene zur Führung des Stufenbandes oder Palettenbandes, sowie mindestens eine zwischen den Umlenkbereichen angeordnete Stütze zur Stützung der mindestens einen Laufschiene auf.

Um die vorgenannten Anforderungen an die Stütze zu erfüllen, weist die mindestens eine Stütze mehrere Steckteile auf, die in montiertem Zustand mittels Steckverbindungen zu einem kastenförmigen Stützengrundkörper zusammengesteckt werden können. Das Merkmal "kastenförmig" beschreibt die dreidimensionale Struktur der Stütze über deren Höhenerstreckung. Die Stütze weist somit nach dem Zusammenstecken der Steckteile einen rohrförmigen, C-profilförmigen oder H- profilförmigen Stützenquerschnitt auf. Durch die Steckverbindungen ist eine äußerst einfache und hochpräzise Stützenfertigung möglich. Die meisten Steckteile sind vorzugsweise Blechteile oder Plattenteile, bei denen verschiedene Ausschnitte, Aussparungen, Laschen, Schraubenlöcher, Schlitze und dergleichen beim Herausschneiden des Steckteiles gleich mitgeschnitten werden. Die Steckteile können beispielsweise mittels Laser- oder Wasserstrahlschneideverfahren aus Stahl-, Buntmetall,- oder Aluminium- Blechtafeln herausgeschnitten werden. Selbstverständlich können die Steckteile auch aus anderen Werkstoffen wie beispielsweise faserverstärkten Kunststoffen hergestellt sein.

Dank der Steckverbindungen können die Steckteile passgenau und verzugsfrei zum Stützengrundkörper zusammengefügt werden. Durch diese Konstruktion können Stützen in einer Präzision hergestellt werden, die beispielsweise mit einer Schweißkonstruktion aus Formprofilen und Platten niemals erreichbar sind, da der Stützengrundkörper aus steckbaren Steckteilen nicht durchgeschweißt werden muss und daher verzugsfrei ist. Die Steckverbindungen sind derart ausgelegt, das die zwischen den Steckteilen auftretenden Zugkräfte, Druckkräfte, Scherkräfte, Biegemomente und Torsionsmomente durch die Steckverbindungen mit Ausnahme in der Montagerichtung der Steckverbindung, formschlüssig aufgenommen werden.

Aufgrund dieser präzise gefertigten Stützen lassen sich die Bauteile der Fahrtreppe oder des Fahrsteiges problemlos zusammenbauen und der Aufwand an Anpassungs-, Ausrichtungs-, und Einstellarbeiten werden auf ein Minimum reduziert. Überdies sind nach dem Zusammenfügen der Steckteile am Stützengrundkörper selbst keine spanabhebenden, teuren Nacharbeiten erforderlich, um weitere Teile anbauen zu können.

Um eine möglichst stabile und tragende Verbindung der Steckteile zu erreichen, sind vorzugsweise zwischen zwei einander angrenzenden, zusammenzufügenden Steckteilen mindestens zwei Steckverbindungen vorgesehen.

Jede der Steckverbindungen weist eine Lasche und eine auf diese Lasche formschlüssig abgestimmte Ausnehmung auf. Die Ausnehmung ist an einem der zusammenzufügenden Steckteile der Stütze ausgebildet. Die in diese Ausnehmung zu steckende Lasche ist an einem weiteren Steckteil der Stütze ausgebildet, welches in montiertem Zustand dem Steckteil mit der Lasche angrenzend angeordnet ist.

Vorzugsweise ist die mindestens eine Steckverbindung so ausgelegt, dass die Lasche der Steckverbindung nur in einer einzigen Montagerichtung in die Ausnehmung einsteckbar ist. Dadurch lassen sich zwei Vorteile erzielen. Erstens existiert dadurch nur eine einzige Möglichkeit, wie zwei benachbarte Steckteile zusammengefügt werden können. Damit kann der Stützengrundkörper auch von weniger qualifizierten Mitarbeitern zusammengesetzt werden. Zweitens kann die Steckverbindung zwischen zwei Steckteilen so angeordnet werden, dass deren Montagerichtung parallel zur Richtung derjenigen Achse des dreiachsigen Spannungszustandes ausgerichtet ist, in welcher die geringsten Spannungen infolge von auf den Stützengrundkörper einwirkenden Kräften und Momenten auftreten. Somit werden nahezu alle in dieser Steckverbindung auftretenden Kräfte und Momente durch den Formschluss der Steckverbindung aufgenommen beziehungsweise innerhalb der Steckverbindung abgestützt.

Eine zusammengefügte Steckverbindung kann daher mit einfachsten Mitteln gesichert werden, da nur das "Ausschlüpfen" beziehungsweise Herausrutschen der Lasche aus der Ausnehmung verhindert werden muss und keine großen Zug-, Druck-, oder Scherkräfte durch das zu applizierende Sicherungsmittel übertragen werden müssen. Vorzugsweise wird mindestens eine der Steckverbindungen des Stützengrundkörpers mittels eines stoffschlüssigen oder formschlüssigen Sicherungsmittels gesichert. Als stoffschlüssige Sicherungsmittel können beispielsweise Schweißnähte, Schweißpunkte (Heftpunkte), Klebstoffe Lötverbindungen, mittels Tauchverfahren applizierte Kunststoffschichten und dergleichen mehr verwendet werden. Als formschlüssige Sicherungsmittel können beispielsweise Deformationen an den Laschen aller Art wie Quetschungen, Stauchungen, Clinchpunkte, umgebogene, an den Laschen ausgebildete Laschenzungen und dergleichen mehr verwendet werden. Zur Sicherung der Steckverbindungen sind auch nicht zwingend hoch qualifizierte Fachkräfte wie beispielsweise geprüfte und zertifizierte Schweißer notwendig.

Damit keine zusätzlichen Verbindungsteile wie beispielsweise Spanten, Knotenbleche oder Bügelteile erforderlich sind, kann die Stütze mindestens einen Schienenbefestigungsbereich zur Befestigung der mindestens einen Laufschiene aufweisen. Dadurch kann mittels Stützen, Laufschienen und gegebenenfalls quer zu einer Längserstreckung des Fahrsteiges oder der Fahrtreppe angeordneten Querstreben der ganze Bereich zwischen den beiden Umlenkbereichen aufgebaut werden. Um die Montage weiter zu vereinfachen, sind vorzugsweise Haken im Schienenbefestigungsbereich ausgebildet, die zum Einhängen einer Laufschiene dienen. Die eingehängten Laufschienen können dann mittels Befestigungselementen wie Schrauben, Klemmpratzen, Klemmkeilen, Klemmstiften, Federclips und dergleichen mehr fest mit der Stütze verbunden werden. Selbstverständlich können auch nichtlösbare Verbindungstechniken eingesetzt werden wie beispielsweise Nieten, Schweißen, Kleben, Clinchen und dergleichen mehr.

In montiertem Zustand kann mindestens eine Querstrebe zwischen mindestens zwei Stützen orthogonal zur Längserstreckung der Fahrtreppe oder des Fahrsteiges angeordnet sein und diese Stützen miteinander verbinden. Durch die mindestens eine Querstrebe werden der Abstand der Stützen zueinander und damit die Spurweite der Laufschienen genau definiert.

Damit die Querstrebe direkt an den Stützen befestigbar ist, aber die Stützen nicht in den Bereich des Stufenbandes oder Palettenbandes hineinragen, kann die Laufschiene mindestens einen Durchbruch zur Durchführung der mindestens einen Querstrebe aufweisen. Sofern die Größe des Durchbruchs auf den Querschnitt der Querstrebe abgestimmt ist, steht die Laufschiene an der Querstrebe an, wenn auf die Laufschienen einwirkende Kräfte sie aus den Haken des Schienenbefestigungsbereichs herausheben wollen. Somit ist die an der Stütze eingehängte Laufschiene durch die mit der Stütze verbundene Querstrebe an der Stütze gesichert. Dadurch können zusätzliche Verbindungselemente wie beispielsweise Schrauben eingespart werden.

Selbstverständlich kann die Laufschiene aber auch mit Schrauben oder Nieten an der Stütze befestigt oder zusätzlich gesichert sein.

Um die Montage noch weiter zu vereinfachen, kann die mindestens eine Laufschiene im Querschnitt C-förmig ausgebildet sein und zwei auf ihren beiden Schenkeln angeordnete Laufbahnen für Laufrollen eines Stufenbandes oder Palettenbandes aufweisen.

Selbstverständlich können an der Stütze auch weitere Bauteile der Fahrtreppe oder des Fahrsteiges befestigt werden. Beispielsweise kann an der Stütze mindestens ein Balustraden- Befestigungsbereich zur Befestigung mindestens eines Balustradenteils ausgebildet sein. Dieser Balustraden- Befestigungsbereich kann eine Klemmvorrichtung zur Befestigung mindestens eines Glaspaneels einer Glasbalustrade sein, wobei der feststehende Teil dieser Klemmvorrichtung vorzugsweise direkt durch Steckteile des Stützengrundkörpers gebildet ist. Zur Fertigstellung der Klemmvorrichtung muss dann lediglich noch eine bewegliche Klemmbacke und mindestens eine Feststellschraube im dafür vorgesehenen Bereich des Stützengrundkörpers eingefügt werden.

Ferner kann an der Stütze mindestens ein Sockelbefestigungsbereich zur Befestigung eines Sockelbleches ausgebildet sein. Da durch die außerordentlich präzise Fertigung des Stützengrundkörpers kaum Einstellarbeiten erforderlich sind, kann das Sockelblech direkt am Stützengrundkörper befestigt werden. Selbstverständlich kann das Sockelblech auch relativ zur Stütze einstellbar ausgeführt sein, so dass Fertigungstoleranzen ausgeglichen und ein den gesetzlichen Vorschriften entsprechender Spalt zwischen dem Stufenband und dem Sockelblech eingestellt werden kann.

Die Stütze kann auch mindestens einen Handlaufführungs-Befestigungsbereich zur Befestigung einer Handlaufführung aufweisen. Diese Handlaufführung kann eine Führungsschiene, eine oder mehrere Führungsrollen, Handlaufaufnahmen, Handlaufstützteile und dergleichen mehr sein.

Vorzugsweise weist die Stütze einen Fußbefestigungsbereich zur Befestigung der Stütze an einer bauseitig erstellten, tragenden Struktur eines Bauwerkes auf. Dieser Fußbefestigungsbereich kann eine Höhenjustiervorrichtung beziehungsweise Höheneinstellvorrichtung beinhalten die es ermöglicht, die Stütze in vertikaler Richtung zu justieren. Dadurch können Unebenheiten der tragenden Struktur über die Längserstreckung der Fahrtreppe oder des Fahrsteiges auf einfache Weise ausgeglichen werden, ohne dass zusätzliches Material wie Distanzbleche, Distanzhülsen, Unterlagscheiben, Keile und dergleichen mehr eingesetzt werden müssen.

Die Fahrtreppe oder der Fahrsteig kann mindestens ein Fahrbahnmodul aufweisen. Dieses Fahrbahnmodul ist aus mindestens zwei Stützstrukturen und mindestens einer Laufschiene gebildet. Jede Stützstruktur beinhaltet zwei mit einer Querstrebe verbundene Stützen, wobei im Fahrbahnmodul die mindestens eine Laufschiene orthogonal zu den Querstreben angeordnet und an den Schienenbefestigungsbereichen der Stützen befestigt ist. Das Fahrbahnmodul kann während des Zusammenbaus von den Umlenkbereichen getrennt auf der tragenden Struktur befestigt werden. Dadurch wird der Einbau der Fahrtreppe oder des Fahrsteiges wesentlich erleichtert. In eingebautem Zustand sind ein oder mehrere Fahrbahnmodule zwischen den Umlenkbereichen angeordnet. Die Umlenkbereiche sind ferner durch die Fahrbahnmodule miteinander verbunden.

Beim Einbau der Fahrtreppe oder des Fahrsteiges in einem Bauwerk werden der erste Umlenkbereich, der zweite Umlenkbereich und mindestens eine Stütze an zugeordneten Aufnahmen befestigt. Diese Aufnahmen sind über die Längserstreckung einer bauseitig erstellten, tragenden Struktur verteilt angeordnet. Außerdem ist die mindestens eine, zwischen den Umlenkbereichen angeordnete Laufschiene an der mindestens einen Stütze befestigt.

Sofern die Balustrade an der mindestens einen Stütze befestigt ist, stützt diese auf die Balustrade wirkende statische und dynamische Lasten wie beispielsweise Querkräfte und Biegemomente über den Fußbefestigungsbereich direkt auf der tragenden Struktur ab, welche beispielsweise ein Stahlträger, ein Betonfundament, ein ausreichend stabiler Fußboden und dergleichen mehr sein kann. Die Laufschienen sind nur an den Schienenbefestigungsbereichen der Stützstrukturen befestigt und werden dadurch von diesen Querkräften und Biegemomenten ausgenommen. Entsprechend können die Laufschienen primär auf die Belastungen durch das Stufenband oder Palettenband ausgelegt werden, was ein einfacher Aufbau und leichte Komponenten ergibt.

Die Herstellung und Montage einer Stütze einer Fahrtreppe oder eines Fahrsteiges kann die folgenden Schritte umfassen:
- Die zur Herstellung des Stützengrundkörpers erforderlichen Steckteile werden aus einem ebenen Blech ausgeschnitten, wobei Ausnehmungen und Vorsprünge beziehungsweise Laschen der Steckverbindungen eines Steckteils durch das Ausschneiden am Steckteil ausgebildet werden.
- Sofern erforderlich, werden die Steckteile des Stützengrundkörpers an vorgesehenen Stellen gebogen oder geformt.
- Ferner werden die Steckteile des Stützengrundkörpers mittels der daran ausgebildeten Steckverbindungen zu einem kastenförmigen Stützengrundkörper zusammengesteckt.
- In einem weiteren Schritt kann mindestens eine der Steckverbindungen gesichert werden.
- Gegebenenfalls kann der Stützengrundkörper mit einer Oberflächenbehandlung versehen werden.
- Zur Komplettierung der Stütze können gegebenenfalls am Stützengrundkörper weitere Bauteile befestigt werden.

Wie bereits erwähnt, kann die mindestens eine zu sichernde Steckverbindung mittels eines formschlüssigen oder stoffschlüssigen Sicherungsmittels gesichert werden. Als stoffschlüssige Sicherungsmittel können beispielsweise Schweißnähte, Schweißpunkte (Heftpunkte), Klebstoffe und dergleichen mehr verwendet werden. Als formschlüssige Sicherungsmittel können beispielsweise Deformationen an den Laschen aller Art wie Quetschungen, Stauchungen, Clinchpunkte, umgebogene, an den Laschen ausgebildete Laschenzungen und dergleichen mehr verwendet werden. Selbstverständlich können auch Nieten, Passstifte oder Schrauben zur Sicherung eingesetzt werden, wenngleich eine Sicherung ohne zusätzliche Bauteile vorzuziehen ist.

Die Fahrtreppe oder der Fahrsteig der vorgenannten Art eignet sich auch ganz besonders zur Modernisierung einer bestehenden Fahrtreppe oder eines bestehenden Fahrsteiges.

Ein solches Modernisierungsverfahren umfasst die Schritte,
- dass eine bestehende Fahrtreppe oder ein bestehender Fahrsteig bis auf das Fachwerk beziehungsweise Tragwerk leergeräumt und gegebenenfalls gereinigt und ausgebessert wird,
- dass das leergeräumte Fachwerk als tragende Struktur dienend im Bereich seines Untergurtes mit Aufnahmen versehen wird an welche die Fußbefestigungsbereiche von Stützen mit einem Stützengrundkörper aus Steckteilen befestigt werden können, und
- dass ein erster Umlenkbereich, ein zweiter Umlenkbereich, sofern vorgängig vormontiert, mindestens ein Fahrbahnmodul oder Stützen mit einem Stützengrundkörper aus Steckteilen, Querstreben und Laufschienen im leergeräumten und mit Aufnahmen versehenen Fachwerk befestigt werden, wobei die Fussbefestigungsbereiche der Stützen mit den Aufnahmen verbunden werden.

Die Fahrtreppe oder der Fahrsteig mit einer zwischen den Umlenkbereichen angeordneten leichten, präzisen und kostengünstigen Struktur welche Stützen aus zusammengesteckten Steckteilen aufweist, wird im Folgenden anhand von Beispielen und mit Bezugnahme auf die Zeichnungen näher erläutert. Darin zeigen:
- Figur 1:: in der Seitenansicht in schematischer Darstellung eine, auf einer tragenden Struktur angeordnete Fahrtreppe, welche Stützen, Querstreben, Laufschienen, Balustraden und ein umlaufendes Stufenband aufweist die zwischen einem ersten Umlenkbereich und einem zweiten Umlenkbereich angeordnet sind;
- Figur 2:: in der Seitenansicht in schematischer Darstellung ein, auf einer tragenden Struktur angeordneter Fahrsteig, welcher Stützen, Querstreben, Laufschienen, Balustraden und ein umlaufendes Palettenband aufweist die zwischen einem ersten Umlenkbereich und einem zweiten Umlenkbereich angeordnet sind;
- Figur 3:: der Fahrsteig der Figur 2 im Querschnitt A-A;
- Figur 4:: in dreidimensionaler Ansicht ein Fahrbahnmodul des Fahrsteiges aus der Figur 2, gebildet aus sechs Stützen, drei Querstreben und zwei Laufschienen, wobei auf den Laufschienen jeweils ein Palettenband- Abschnitt des Palettenband- Vorlaufes und des Palettenband- Rücklaufes dargestellt ist um die Funktion des Fahrbahnmoduls zu zeigen;
- Figur 5:: eine Explosionszeichnung eines Stützengrundkörpers einer in den Figuren 1 bis 4 dargestellten Stütze; und
- Figur 6:: den fertig zusammengesteckten Stützengrundkörper der Figur 4 und die zur Komplettierung der Stütze anzubauenden Bauteile.

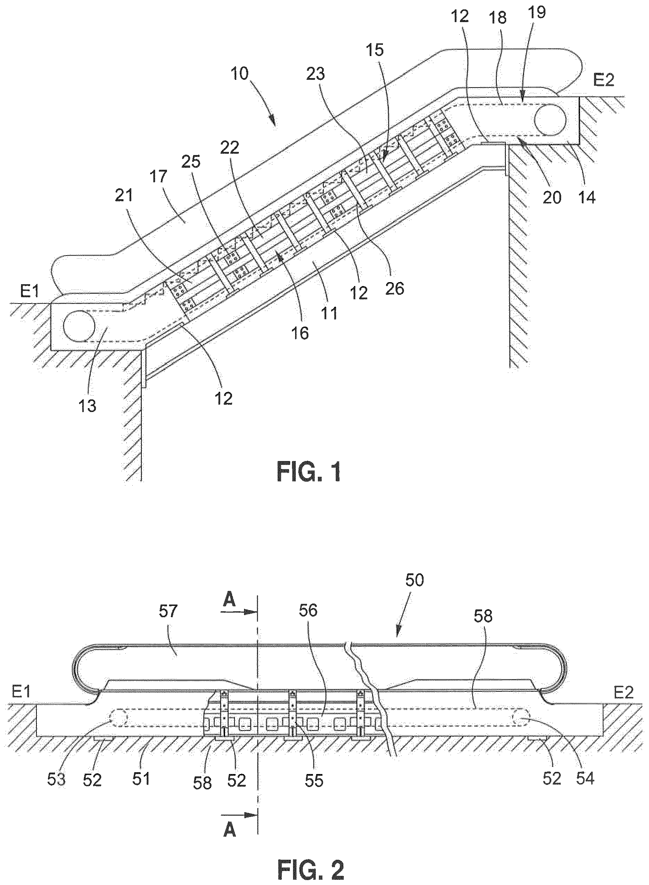

Figur 1 zeigt in schematischer Darstellung in der Seitenansicht eine Fahrtreppe 10, die auf einer tragenden Struktur 11 angeordnet ist und die eine untere Ebene E1 mit einer oberen Ebene E2 verbindet. Die tragende Struktur 11 ist beispielhaft als schlichter I-Träger ausgestaltet um deutlich zu zeigen, dass diese tragende Struktur 11 der Gestaltungsfreiheit des Architekten überlassen werden kann. Selbstverständlich kann die tragende Struktur 11 auch ein betonierter Treppenaufgang, eine Betonrampe ein Fachwerk oder eine frei gestaltbare Brücke sein. Die tragende Struktur 11 muss bestimmte Bedingungen bezüglich ihrer Steifigkeit und Traglast erfüllen, die der Hersteller der Fahrtreppe oder des Fahrsteiges dem Architekten vorschreibt.

Auf dieser bauseitig zu erstellenden, tragenden Struktur 11 sind Aufnahmen 12 vorzusehen oder nachträglich anzubringen, an denen die Teile der Fahrtreppe 10 montiert werden. Der besseren Übersicht wegen sind nur drei Aufnahmen 12 mit Bezugszeichen versehen, obwohl im vorliegenden Beispiel für jede, der nachfolgend beschriebenen Stützen 26 eine Aufnahme 12 vorhanden ist. Die Aufnahmen 12 können einfache Montageplatten sein, die beispielsweise mit der Armierung der tragenden Struktur 11 direkt verbunden sind. Selbstverständlich sind auch andere geeignete Aufnahmen 12 wie Betonanker, Schraubenlöcher, Gewindestangen, Schweißplatten und dergleichen mehr einsetzbar.

Die Fahrtreppe 10 umfasst einen ersten Umlenkbereich 13 und einen zweiten Umlenkbereich 14 sowie zwischen den Umlenkbereichen 13, 14 angeordnete Stützstrukturen 15, Laufschienen 16, Balustraden 17 und ein umlaufendes Stufenband 18. Der Übersicht wegen ist nur eine Stützstruktur 15 mit einem Bezugszeichen versehen. Das Stufenband 18 wird in der oberen Ebene E2 und in der unteren Ebene E1 umgelenkt und weist somit einen Stufenband-Vorlauf 19 und einen Stufenband-Rücklauf 20 auf. Aus Ubersichtlichkeitsgründen wurde auf die detaillierte Darstellung des Stufenbandes 18 verzichtet.

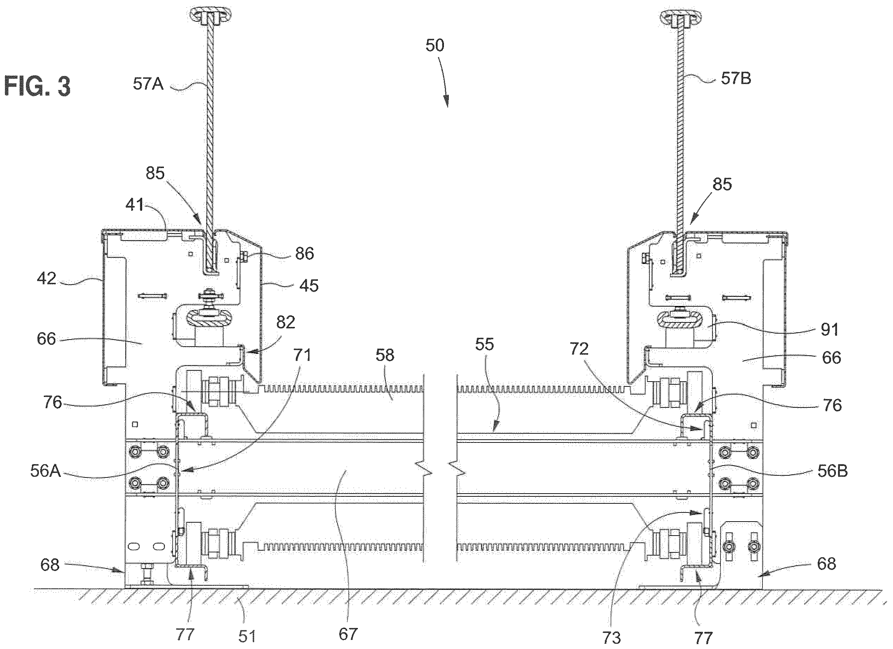

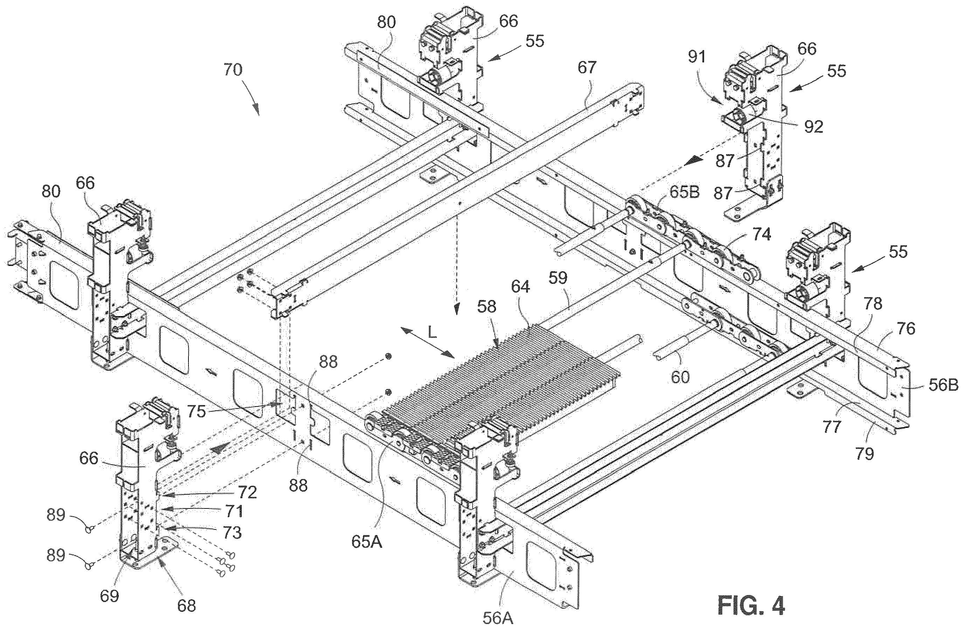

Aus der Figur 1 ist klar ersichtlich, dass die Laufschienen 16 in Laufschienenabschnitte 21, 22, 23 unterteilt und mittels Verbindungsplatten 25 miteinander verschraubt beziehungsweise verbunden sind. Die Laufschienenabschnitte 21, 22, 23 weisen vorzugsweise eine gleiche Länge auf, sie können aber wie in der Figur 1 erkennbar, auch unterschiedliche Längen aufweisen. Die Laufschienen 16 werden durch mehrere Stützstrukturen 15 an der tragenden Struktur 11 abgestützt. Von den Stützstrukturen 15 sind lediglich die gegen die Betrachtungsebene gerichteten Stützen 26 sichtbar, daher werden die Stützstrukturen 15 erst weiter unten in der Beschreibung der Figuren 3 und 4 näher erläutert. Dort sind zwar Stützstrukturen 55 des in der Figur 2 dargestellten Fahrsteiges 50 beschrieben, der Aufbau und die Funktion der Stützstrukturen 15 der Fahrtreppe 10 entsprechen aber den in den Figuren 3 und 4 gezeigten und beschriebenen Stützstrukturen 55. Jede der Stützen 26 weist einen Fussbefestigungsbereich auf, der wie dargestellt, mit der zugeordneten Aufnahme 12 der tragenden Struktur 11 starr verbunden ist.

Figur 2 zeigt in der Seitenansicht in schematischer Darstellung einen Fahrsteig 50, der auf einer tragenden Struktur 51 angeordnet ist. Als tragende Struktur 51 dient ein Fußboden mit einer Grube, die eine ausreichende Festigkeit besitzt. Selbstverständlich kann der Fahrsteig 50 auch auf einer der tragenden Strukturen montiert werden, wie sie in der Beschreibung zur Figur 1 erwähnt werden. Der Fahrsteig 50 kann auch auf einen flachen Fußboden ohne Grube montiert werden, wenn dieser zwischen zwei Rampen angeordnet ist. Die beiden Rampen sind empfehlenswert, damit die Benutzer bequem auf die Höhe beziehungsweise auf das Niveau des Palettenbandes 58 gelangen können. Auch der Fußboden 51 weist Aufnahmen 52 auf, an denen die Bauteile des Fahrsteiges 50 befestigt werden. Zu diesen Bauteilen gehören ein erster Umlenkbereich 53 und ein zweiter Umlenkbereich 54 sowie zwischen den Umlenkbereichen 53, 54 angeordnete Stützstrukturen 55, Laufschienen 56, Balustraden 57 und das umlaufende Palettenband 58. Somit entspricht der Aufbau des Fahrsteiges 50 im Wesentlichen dem in der Figur 1 beschriebenen Aufbau der Fahrtreppe 10, auch wenn bei den vorliegenden Ausführungsbeispielen der Figuren 1 und 2 bei der Fahrtreppe 10 zwei Laufschienen 16 übereinander angeordnet dargestellt sind und beim Fahrsteig 50 nur eine Laufschiene 56.

Auch die in der Figur 2 dargestellten Laufschienen 56 des Fahrsteiges 50 können in Laufschienenabschnitte unterteilt sein. Diese werden wie die Laufschienenabschnitte der Fahrtreppe durch die Stützstrukturen 55 abgestützt, deren Fussbefestigungsbereiche an den Aufnahmen 52 befestigt sind. Wenn die einzelnen Laufbahnabschnitte und die ihnen zugeordneten Stützstrukturen 55 bereits im Herstellerwerk zu Fahrbahnmodulen zusammengefügt werden, können der Transport vom Hersteller zum Einbauort und die Montage des Fahrsteiges 50 oder der Fahrtreppe 10 auf der am Einbauort vorbereiteten, tragenden Struktur 11, 51 wesentlich vereinfacht werden.

In Figur 3 ist der Fahrsteig 50 der Figur 2 im Querschnitt A-A dargestellt. Die Stützstruktur 55, die Laufschienen 56A, 56B und das Palettenband 58 entsprechen den in der Figur 4 dargestellten Bauteilen, weshalb diese dieselben Bezugszeichen aufweisen. Nachfolgend werden die Figuren 3 und 4 gemeinsam beschrieben.

Die Figur 4 zeigt in dreidimensionaler Ansicht ein Fahrbahnmodul 70 des Fahrsteiges 50 aus der Figur 2, gebildet aus drei Stützstrukturen 55 und zwei Laufschienen 56A, 56B beziehungsweise Laufschienenabschnitten. Selbstverständlich können auch längere Fahrbahnmodule 70 mit mehr als drei Stützstrukturen 55 gebildet werden. Auf den Laufschienen 56A, 56B ist nur ein kleiner Teil des Palettenbandes 58, nämlich ein Palettenband-Abschnitt 59 des Palettenband- Vorlaufs und ein Palettenband-Abschnitt 60des Palettenband- Rücklaufs dargestellt, um die Funktion der Laufschienen 56A, 56B zu zeigen. Die einzelnen Paletten 64 des Palettenbandes 58 sind ferner nur zur Hälfte dargestellt, um die beiden Palettenketten beziehungsweise Rollenketten 65A, 65B und deren Laufrollen 74 zu beiden Seiten des Palettenbandes 58 zu zeigen. Die Stützstrukturen 55 weisen jeweils zwei Stützen 66 auf, die durch eine Querstrebe 67 miteinander starr verbunden sind. Die beiden Stützen 66 einer Stützstruktur 55 weisen einen identischen Aufbau auf, so dass keine rechts-, links- Zuordnung zu den Laufschienen 56A, 56B erforderlich ist.

Die nachfolgend verwendeten Begriffe "Unten" und "Oben" definieren die Lage der Befestigungsbereiche an der Stütze 66 im eingebauten Zustand und sind auf die Richtung der Schwerkraft bezogen. An der Stütze 66 ist am unteren Ende ein Fußbefestigungsbereich 68 ausgebildet. Dieser weist eine Höhenjustiervorrichtung 69 auf, um Unebenheiten beziehungsweise Niveauunterschiede der nicht dargestellten, tragenden Struktur auszugleichen. Oberhalb des Fußbefestigungsbereichs 68 weist die Stütze 66 einen Schienenbefestigungsbereich 71 auf. Dieser Schienenbefestigungsbereich 71 ist in eine obere Schienenbefestigungsstelle 72 und in eine untere Schienenbefestigungsstelle 73 unterteilt, da zwischen diesen Schienenbefestigungsstellen 72, 73 die Querstrebe 67 an der Stütze 66 befestigt ist. Detailliertere Ausführungen zu den Schienenbefestigungsstellen 72, 73 sind weiter unten zu finden.

Damit sich das Palettenband 58 in der Laufrichtung L frei bewegen kann, müssen die Stützen 66 auf der dem Palettenband 58 abgewandten Seite der Laufschienen 56A, 56B angeordnet sein. Um dies zu ermöglichen, weisen die Laufschienen 56A, 56B beziehungsweise die dargestellten Laufschienenabschnitte für jede Querstrebe 67 einen Durchbruch 75 auf, durch den die zugeordnete Querstrebe 67 hindurchreicht und an der Stütze 66 befestigt ist. Die Laufschiene 56A, 56B ist im Querschnitt zu ihrer Längserstreckung C-förmig ausgebildet und beinhaltet sowohl eine obere Laufbahn 76 für den Palettenband-Abschnitt des Vorlaufs 59, als auch eine untere Laufbahn 77 für den Paletten-Abschnitt des Rücklaufs 60.

In Figur 3 ist gut erkennbar, dass die mindestens eine Querstrebe 67 durch die beiden Laufschienen 56A, 56B hindurchreicht und dass der Schienenbefestigungsbereich 71 in eine obere Schienenbefestigungsstelle 72 und in eine untere Schienenbefestigungsstelle 73 aufgeteilt ist. Beide Schienenbefestigungsstellen 72, 73 weisen Haken 87 (Bezugszeichen in Figur 4) und die Laufschienen 56A, 56B weisen Schlitze 88 (sichtbar in Figur 4) auf, so dass die Laufschienen 56A, 56B mit den Schlitzen 88 in die Haken 87 eingehängt werden können. Diese Fügehilfen erleichtern den Zusammenbau wesentlich und tragen zu einer präziseren Positionierung der Laufschiene 56A, 56B relativ zu den Stützen 66 und zur Querstrebe 67 bei. Gesichert werden die Laufschienen 56A, 56B an der Stütze 66 mittels Schrauben 89, es sind aber auch andere bekannte Befestigungsmittel wie Bolzen, Nieten, Schweißverbindungen, Clinchverbindungen, Klemm-, Schnapp-, und Federverbindungen und dergleichen mehr verwendbar.

Um die Formstabilität der Laufbahnen 76, 77 zu erhöhen, weisen die Laufschienen 56A, 56B an beiden Laufbahnen 76, 77 nach unten gerichtete Abbiegungen 78, 79 auf. Die Abbiegung 78 der oberen Laufbahn 76 stützt mit ihrem Ende zudem an der Querstrebe 67 ab, da die Laufbahn 76 des Palettenband-Vorlaufs 59 wesentlich höhere, durch die Benutzer des Fahrsteiges 50 verursachte Förder- beziehungsweise Gewichtslasten abstützen muss als die Laufbahn 77 des Palettenband-Rücklaufs 60. Zur seitlichen Führung des Palettenbandes 58 können an den Abbiegungen 78, 79 oder an den Laufbahnen 76, 77 Seitenführungsleisten 80 angeordnet sein.

Gut zu erkennen ist in der Figur 3 auch ein an der Stütze 66 ausgebildeter Sockelbefestigungsbereich 82, an dem ein Sockelblech 45 befestigt ist. Auch die Balustraden-Befestigungsbereiche 85 mit den daran angeordneten Klemmvorrichtungen 86 zur Aufnahme der beiden Balustraden, 57A, 57B sind dargestellt. Ferner werden durch die Stützen 66 der Stützstruktur 55 weitere Teile des Sockels wie beispielsweise Abdeckbleche 41, 42 über die Fußbefestigungsbereiche 68 der Stützen 66 gegen die tragende Struktur 51 abgestützt.

Oberhalb des Schienenbefestigungsbereichs 71 ist ein Handlaufführungs-Befestigungsbereich 91 an der Stütze 66 ausgebildet, an dem Führungsteile wie die dargestellte Handlaufführungsrolle 92 befestigt werden können. Selbstverständlich können auch Handlauf- Führungsschienen an diesen Handlaufführungs-Befestigungsbereichen 91 angebracht werden. Ferner kann die Stütze 66 weitere Befestigungsbereiche aufweisen, an denen Halterungen für Abdeckungen wie beispielsweise Seitenpaneele oder Abdeckungsteile des Sockels befestigt werden können.

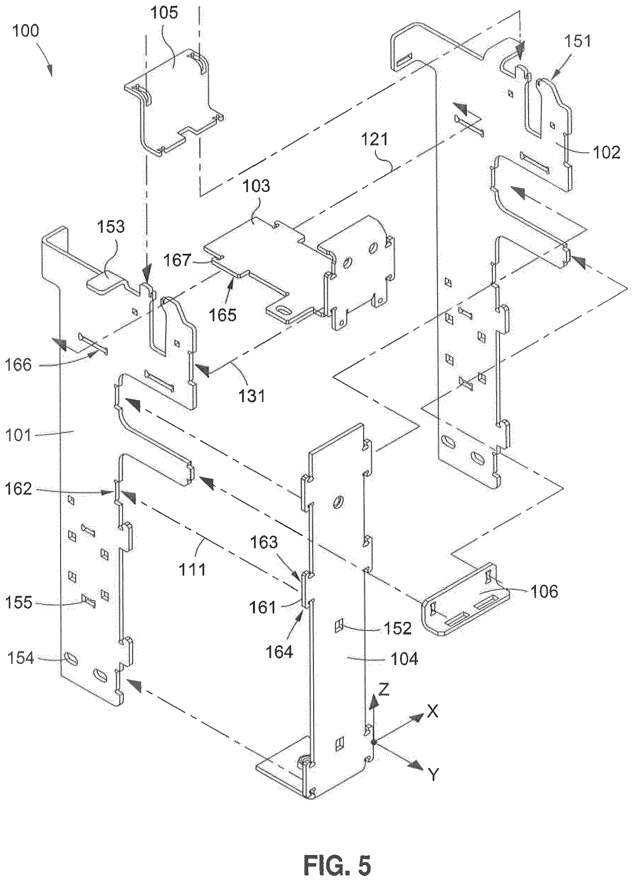

Figur 5 zeigt eine Explosionszeichnung eines kastenförmigen Stützengrundkörpers 100 einer in den Figuren 1 bis 4 und 6 dargestellten Stütze 66. Der Stützengrundkörper 100 weist mehrere Steckteile 101 - 106 auf, welche in montiertem Zustand mittels formschlüssiger Steckverbindungen 111, 121, 131 zum kastenförmigen Stützengrundkörper 100 zusammengesteckt sind. Der besseren Übersicht wegen sind nicht alle dargestellten Steckverbindungen mittels strichpunktierter Linie hervorgehoben und nur eine der Steckverbindungen 111, 121, 131 ist vollständig mit Bezugszeichen versehen und ausführlich beschrieben. Aus der Figur 5 ist aber eindeutig ersichtlich, dass alle erkennbaren, formschlüssigen Steckverbindungen in derselben Weise aufgebaut sind.

Die Steckteile 101 - 106 des Stützengrundkörpers 100 werden aus ebenen, verzugsfreien Blechtafeln durch gängige Bearbeitungsverfahren wie beispielsweise Laser- oder Wasserstrahlschneideverfahren herausgeschnitten. Dabei können verschiedene Ausschnitte 151, Aussparungen 152, Laschen 153, Schraubenlöcher 154, Schlitze 155 und dergleichen mehr beim Herausschneiden des Steckteiles 101 - 106 gleich mitgeschnitten werden. Einzelne Bereiche der ausgeschnittenen Steckteile 101 - 106 können anschließend entlang vorgesehener Biegelinien gebogen werden. Selbstverständlich können einzelne Bereiche der ausgeschnittenen Steckteile 101 - 106 auch geformt, beispielsweise mit Sicken versehen werden

Jede der Steckverbindungen 111, 121, 131 weist eine Lasche 161, 165 und eine zu dieser Lasche 161, 165 formschlüssig abgestimmte Ausnehmung 162, 166 auf. Die am Beispiel der Steckverbindung 111 mit einem Bezugszeichen versehene Ausnehmung 162 ist am linksseitigen Steckteil 101 des Stützengrundkörpers 100 ausgebildet. Die in diese Ausnehmung 162 zu steckende Lasche 161 ist am frontseitigen Steckteil 104 des Stützengrundkörpers 100 ausgebildet, welches in montiertem Zustand dem linksseitigen Steckteil 101 mit der Ausnehmung 162 angrenzend angeordnet ist. Sowohl die Laschen 161, 165 der Steckverbindungen 111, 121, 131 als auch die Ausnehmungen 162, 166 können beim Herausschneiden der Steckteile 101 - 106 aus den Blechtafeln ebenfalls mitgeschnitten werden.

Vorzugsweise ist die mindestens eine Steckverbindung 111, 121, 131 so ausgelegt, dass die Lasche 161, 165 der Steckverbindung 111, 121, 131 nur in einer einzigen Montagerichtung in die Ausnehmung 162, 166 einsteckbar ist. Im vorliegenden Beispiel wird dies dadurch erreicht, dass an der Lasche 161 noch Laschen- Nasen 163, 164 ausgebildet sind. Dadurch lassen sich zwei Vorteile erzielen. Erstens existiert nur eine einzige Möglichkeit, wie zwei benachbarte Steckteile 101 - 106 zusammengefügt werden können. Damit kann der Stützengrundkörper 100 auch von weniger qualifizierten Mitarbeitern zusammengesetzt werden. Zweitens kann die Steckverbindung 111, 121, 131 zwischen zwei Steckteilen 101 - 106 so angeordnet werden, dass deren Montagerichtung parallel zur Richtung derjenigen Achse des dreiachsigen Spannungszustandes X,Y,Z ausgerichtet ist, in welcher die geringsten Spannungen beziehungsweise Kräfte infolge von auf den Stützengrundkörper einwirkenden Kräften und Momenten zu erwarten sind. Somit werden nahezu alle in diesen Steckverbindungen 111, 121, 131 auftretenden Kräfte und Momente durch die Steckverbindungen 111, 121, 131 formschlüssig aufgenommen beziehungsweise in der Steckverbindung 111, 121, 131 abgestützt.

Eine Besonderheit stellt die Montage des kopfseitigen Steckteils 103 mit dem linksseitigen Steckteil 101 und mit dem rechtsseitigen Steckteil 102 dar. Damit die Lasche 161 der Steckverbindung 131 in die Ausnehmung 162 eingesteckt werden kann, muss die Lasche 165 der Steckverbindung 121 nach dem einstecken in der Ausnehmung 166 schiebbar sein. Auch die schiebbare Lasche 165 weist eine Nase 167 auf, so dass für die Steckverbindung 121 letztendlich wie für die anderen Steckverbindungen 111, 131 auch, nur eine Montagerichtung, nämlich die Verschiebung in der Ausnehmung 166, festgelegt ist.

Eine zusammengefügte Steckverbindung 111, 121, 131 kann daher mit einfachsten Mitteln gesichert werden, da nur das "Ausschlüpfen" der Lasche 161, 165 aus der Ausnehmung 162, 166 verhindert werden muss und keine großen Zug-, Druck-, oder Scherkräfte durch das zu applizierende Sicherungsmittel übertragen werden müssen. Vorzugsweise wird mindestens eine der Steckverbindungen 111, 121, 131 des Stützengrundkörpers 100 mittels eines stoffschlüssigen oder formschlüssigen Sicherungsmittels gesichert. Als stoffschlüssige Sicherungsmittel können beispielsweise Schweißnähte, Schweißpunkte (Heftpunkte), Klebstoffe Lötverbindungen, mittels Tauchverfahren applizierte Kunststoffschichten und dergleichen mehr verwendet werden. Als formschlüssige Sicherungsmittel können beispielsweise Deformationen an den Laschen aller Art wie Quetschungen, Stauchungen, Clinchpunkte, umgebogene, an den Laschen ausgebildete Laschenzungen und dergleichen mehr verwendet werden. Zur Sicherung der Steckverbindungen 111, 121, 131 sind auch nicht zwingend hoch qualifizierte Fachkräfte wie beispielsweise geprüfte und zertifizierte Schweißer notwendig.

Dank der Steckverbindungen 111, 121, 131 können die Steckteile passgenau und verzugsfrei zum Stützengrundkörper 100 zusammengefügt werden.

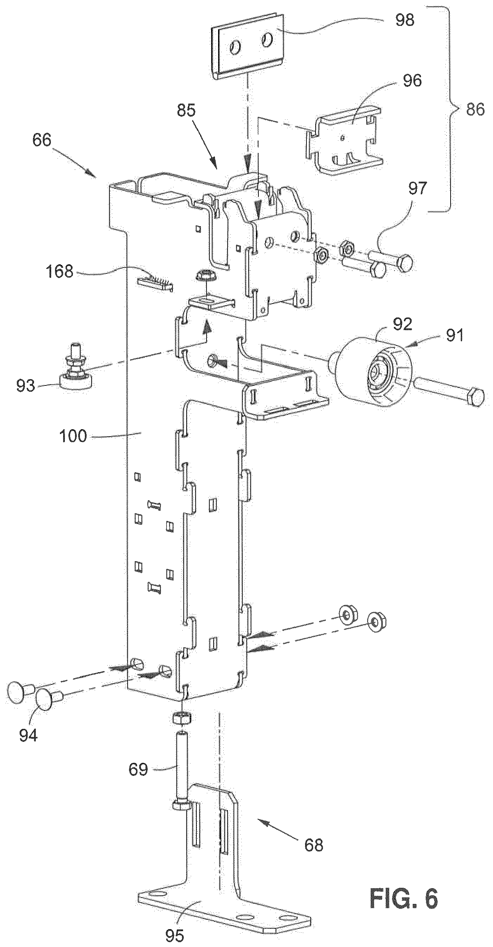

Figur 6 zeigt den fertig zusammengesteckten und mittels Heftnähten 168 (nur eine Heftnaht 168 dargestellt) gesicherten Stützengrundkörper 100 der Figur 5 sowie die zur Komplettierung der Stütze 66 anzubauenden Bauteile.

Der Fußbefestigungsbereich 68 der Stütze 66 wird durch den Anbau des Fußes 95 mittels der Schrauben 94 und der als Höhenjustiervorrichtung 69 dienenden Einstellschraube mit Kontermutter fertiggestellt.

Der Balustraden-Befestigungsbereich 85 der Stütze 66 wird durch das Einfügen einer Klemmvorrichtung 86 fertiggestellt. Diese Klemmvorrichtung 86 umfasst ein Druckstück 96, Stellschrauben 97 mit Kontermuttern zur Erzeugung einer Klemmkraft zwischen dem Stützengrundkörper 100 und dem Druckstück 96 sowie einer elastischen Einlage 98 zur Schonung eines nicht dargestellten Glaspaneels der in der Figur 3 dargestellten Balustraden 57A, 57B.

Ausserdem werden am Handlaufführungs-Befestigungsbereich 91 der Stütze 66 eine Handlaufführungsrolle 92 und eine Seitenführungsrolle 93 befestigt. Nach dem Anbau dieser Bauteile kann die fertige Stütze 66 beispielsweise zu einem Montageplatz gebracht werden, an dem eine Mehrzahl Stützen 66, Querstreben 67 und Laufschienen 56A, 56B zu Fahrbahnmodulen 70 zusammengebaut werden, wie dies in der Figur 4 dargestellt ist.

Obwohl die Erfindung detailliert anhand eines Fahrbahnmoduls eines Fahrsteiges beschrieben worden ist, ist es offensichtlich, dass ein Fahrbahnmodul einer Fahrtreppe auch in gleicher Weise ausgeführt werden kann. Außerdem kann die Laufbahn des Palettenband- oder Stufenband- Vorlaufes in einer ersten Laufschiene und die Laufbahn des Palettenband- oder Stufenband- Rücklaufes in einer zweiten Laufschiene ausgebildet sein. Zudem können durch die erfindungsgemässe Fahrtreppe oder den erfindungsgemässen Fahrsteig aufgrund der Kombinationsmöglichkeit mit einer beliebig ausgestalteten tragenden Struktur zahlreiche weitere Ausführungsvarianten in Kenntnis der vorliegenden Erfindung geschaffen werden, beispielsweise durch die Modernisierung bestehender Fahrtreppen oder Fahrsteige.

## Patentansprüche

1. Fahrtreppe (10) mit einem Stufenband (18) oder Fahrsteig (50) mit einem Palettenband (58), mit einem ersten Umlenkbereich (13, 53) und mit einem zweiten Umlenkbereich (14, 54), wobei das Palettenband (58) beziehungsweise das Stufenband (18) zwischen dem ersten Umlenkbereich (13, 53) und dem zweiten Umlenkbereich (14, 54) umlaufend angeordnet ist und die Fahrtreppe (10) oder der Fahrsteig (50) mindestens eine, zwischen den Umlenkbereichen (13, 14, 53, 54) angeordnete Laufschiene (16, 56, 56A, 56B) zur Führung des Stufenbandes (18) oder Palettenbandes (58), sowie mindestens eine zwischen den Umlenkbereichen (13, 14, 53, 54) angeordnete Stütze (66) zur Stützung der mindestens einen Laufschiene (16, 56, 56A, 56B) aufweist, **dadurch gekennzeichnet, dass** die mindestens eine Stütze (66) mehrere Steckteile (101, 102, 103, 104, 105, 106) aufweist, die in montiertem Zustand mittels Steckverbindungen (111, 121, 131) zu einem kastenförmigen Stützengrundkörper (100) zusammensteckbar sind.

2. Fahrtreppe (10) oder Fahrsteig (50) nach Anspruch 1, wobei die Steckteile (101, 102, 103, 104, 105, 106) Blechteile oder Plattenteile sind.

3. Fahrtreppe (10) oder Fahrsteig (50) nach Anspruch 1 oder 2, wobei zwischen zwei einander angrenzenden, zusammenzufügenden Steckteilen (101, 102, 103, 104, 105, 106) mindestens zwei Steckverbindungen (111, 121, 131) vorgesehen sind.

4. Fahrtreppe (10) oder Fahrsteig (50) nach einem der Ansprüche 1 bis 3, wobei jede der Steckverbindungen (111, 121, 131) eine Lasche (161, 165) und eine zu dieser Lasche (161, 165) formschlüssig abgestimmte Ausnehmung (162, 166) aufweist, wobei die Ausnehmung (162, 166) an einem Steckteil (101, 102, 103, 104, 105, 106) der Stütze (66) ausgebildet ist und die in diese Ausnehmung (162, 166) zu steckende Lasche (161, 165) an einem weiteren, in montiertem Zustand dem Steckteil (101, 102, 103, 104, 105, 106) mit der Lasche (161, 165) angrenzenden Steckteil (101, 102, 103, 104, 105, 106) der Stütze (66) ausgebildet ist.

5. Fahrtreppe (10) oder Fahrsteig (50) nach Anspruch 4, wobei die Lasche (161, 165) mindestens einer Steckverbindung (111, 121, 131) nur in einer einzigen Montagerichtung in die Ausnehmung (162, 166) einsteckbar ist.

6. Fahrtreppe (10) oder Fahrsteig (50) nach einem der Ansprüche 1 bis 5, wobei mindestens eine der Steckverbindungen (111, 121, 131) mittels eines stoffschlüssigen oder formschlüssigen Sicherungsmittels (168) gesichert ist.

7. Fahrtreppe (10) oder Fahrsteig (50) nach einem der Ansprüche 1 bis 6, wobei die Stütze (66) mindestens einen Schienenbefestigungsbereich (71) zur Befestigung der mindestens einen Laufschiene (16, 56, 56A, 56B) aufweist.

8. Fahrtreppe (10) oder Fahrsteig (50) nach Anspruch 7, wobei Haken (87) im Schienenbefestigungsbereich (71) ausgebildet sind, die zum Einhängen einer Laufschiene (16, 56, 56A, 56B) dienen.

9. Fahrtreppe (10) oder Fahrsteig (50) nach Anspruch 8, wobei in montiertem Zustand mindestens eine Querstrebe (67) zwischen mindestens zwei Stützen (66) orthogonal zu einer Längserstreckung der Fahrtreppe (10) oder des Fahrsteiges (50) angeordnet ist und diese Stützen (66) miteinander verbindet und die an der Stütze (66) eingehängte Laufschiene (16, 56, 56A, 56B) durch die mit der Stütze (66) verbundene Querstrebe (67) gesichert ist.

10. Fahrtreppe (10) oder Fahrsteig (50) nach Anspruch 9, wobei die Laufschiene (16, 56, 56A, 56B) mindestens einen Durchbruch (75) zur Durchführung der mindestens einen Querstrebe (67) aufweist.

11. Fahrtreppe (10) oder Fahrsteig (50) nach einem der Ansprüche 1 bis 10 wobei die mindestens eine Laufschiene (16, 56, 56A, 56B) im Querschnitt C-förmig ausgebildet ist und zwei Laufbahnen (76, 77) für Laufrollen (74) eines Stufenbandes (18) oder Palettenbandes (58) aufweist.

12. Fahrtreppe (10) oder Fahrsteig (50) nach einem der Ansprüche 1 bis 11, wobei die Stütze (66) mindestens einen der nachfolgend aufgeführten Befestigungsbereiche zur Befestigung von Bauteilen der Fahrtreppe (10) oder des Fahrsteiges (50) aufweist:
• mindestens einen Balustradenbefestigungsbereich (85) zur Befestigung mindestens eines Balustradenteils (57A, 57B),
• mindestens einen Handlaufführungs-Befestigungsbereich (91) zur Befestigung einer Handlaufführung (92, 93),
• mindestens einen Sockelbefestigungsbereich (82) zur Befestigung eines Sockelbleches (45), oder
• mindestens einen Fußbefestigungsbereich (68) zur Befestigung der Stütze (66) an einer bauseitig erstellten, tragenden Struktur (11, 51) eines Bauwerkes.

13. Fahrtreppe (10) oder Fahrsteig (50) nach einem der Ansprüche 1 bis 12, wobei die Fahrtreppe (10) oder der Fahrsteig (50) mindestens ein Fahrbahnmodul (70) aufweist, welches Fahrbahnmodul (70) aus mindestens zwei Stützstrukturen (55) und mindestens einer Laufschiene (16, 56, 56A, 56B) gebildet ist und jede Stützstruktur (55) zwei mit einer Querstrebe (67) verbundene Stützen (66) beinhaltet, wobei im Fahrbahnmodul (70) die mindestens eine Laufschiene (16, 56, 56A, 56B) orthogonal zu den Querstreben (67) der Stützstrukturen (55) angeordnet und an den Schienenbefestigungsbereichen (71) der Stützstrukturen (55) befestigt ist und in eingebautem Zustand ein oder mehrere Fahrbahnmodule (70) zwischen den Umlenkbereichen (13, 14, 53, 54) angeordnet, und die Umlenkbereiche (13, 14, 53, 54) durch das mindestens ein Fahrbahnmodul (70) miteinander verbunden sind.

14. Fahrtreppe (10) oder Fahrsteig (50) nach einem der Ansprüche 1 bis 13, wobei der erste Umlenkbereich (13, 53), der zweite Umlenkbereich (14, 54) und mindestens eine Stütze (66) an zugeordneten Aufnahmen (12, 52) befestigt sind, welche Aufnahmen (12, 52) über die Längserstreckung einer bauseitig erstellten, tragenden Struktur (11, 51) verteilt angeordnet sind und die mindestens eine, zwischen den Umlenkbereichen (13, 14, 53, 54) angeordnete Laufschiene (16, 56, 56A, 56B) an der mindestens einen Stütze (66) befestigt ist.

15. Verfahren zur Herstellung und Montage einer Stütze (66) einer Fahrtreppe (10) oder eines Fahrsteiges (50) nach einem der Ansprüche 1 bis 14, **gekennzeichnet durch** die Schritte,
• dass die zur Herstellung des Stützengrundkörpers (100) erforderlichen Steckteile (101, 102, 103, 104, 105, 106) aus einem ebenen Blech oder einer Platte ausgeschnitten werden, wobei Ausnehmungen (162, 166) und Laschen (161, 165) der Steckverbindungen (111, 121, 131) eines Steckteils (101, 102, 103, 104, 105, 106) durch das Ausschneiden am Steckteil (101, 102, 103, 104, 105, 106) ausgebildet werden;
• dass sofern erforderlich, die Steckteile (101, 102, 103, 104, 105, 106) des Stützengrundkörpers (100) an vorgesehenen Stellen gebogen oder geformt werden,
• dass die Steckteile (101, 102, 103, 104, 105, 106) des Stützengrundkörpers (100) mittels der daran ausgebildeten Steckverbindungen (111, 121, 131) zu einem kastenförmigen Stützengrundkörper (100) zusammengesteckt werden,
• dass gegebenenfalls der Stützengrundkörper (100) mit einer Oberflächenbehandlung versehen wird, und
• dass gegebenenfalls am Stützengrundkörper (100) weitere Bauteile zur Komplettierung der Stütze (66) befestigt werden.

16. Verfahren zur Herstellung und Montage einer Stütze (66) nach Anspruch 15, wobei mindestens eine der Steckverbindungen (111, 121, 131) mittels eines formschlüssigen oder stoffschlüssigen Sicherungsmittels (168) gesichert wird.

17. Verfahren zur Modernisierung einer Fahrtreppe (10) oder eines Fahrsteiges, (50) wobei eine bestehende Fahrtreppe oder ein bestehender Fahrsteig bis auf das Fachwerk leergeräumt wird, **gekennzeichnet durch** die Schritte,
• dass das leergeräumte Fachwerk als tragende Struktur (11, 51) dienend im Bereich seines Untergurtes mit Aufnahmen (12, 52) versehen wird, an welche die Stützen (66) einer Fahrtreppe (10) oder eines Fahrsteiges (50) nach einem der Ansprüche 1 bis 14 befestigt werden können, und
• dass ein erster Umlenkbereich (13, 53), ein zweiter Umlenkbereich (14, 54) und mindestens eine Stütze (66) einer Fahrtreppe (10) oder eines Fahrsteiges (50) nach einem der Ansprüche 1 bis 14 im leergeräumten und mit Aufnahmen (12, 52) versehenen Fachwerk befestigt wird, wobei die Stützen (66) mit den Aufnahmen (12, 52) verbunden werden.

## Claims

1. Escalator (10) comprising a step belt (18) or moving walkway (50) comprising a plate belt (58), with a first deflecting region (13, 53) and with a second deflecting region (14, 54), wherein the plate belt (58) or the step belt (18) is arranged to circulate between the first deflecting region (13, 53) and the second deflecting region (14, 54) and the escalator (10) or the moving walkway (50) comprises at least one guide rail (16, 56, 56A, 56B), which is arranged between the deflecting regions (13, 14, 53, 54), for guidance of the step belt (18) or plate belt (58), as well as at least one support (66), which is arranged between the deflecting regions (13, 14, 53, 54), for supporting the at least one guide rail (16, 56, 56A, 56B), **characterised in that** the at least one support (66) comprises a plurality of plug parts (101, 102, 103, 104, 105, 106) which in the assembled state can be plugged together by means of plug connections (111, 121, 131) to form a box-shaped support base body (100).

2. Escalator (10) or moving walkway (50) according to claim 1, wherein the plug parts (101, 102, 103, 104, 105, 106) are sheet-metal parts or plate parts.

3. Escalator (10) or moving walkway (50) according to claim 1 or 2, wherein at least two plug connections (111, 121, 131) are provided between two mutually adjacent plug parts (101, 102, 103, 104, 105, 106) to be joined together.

4. Escalator (10) or moving walkway (50) according to any one of claims 1 to 3, wherein each of the plug connections (111, 121, 131) comprises a tongue (161, 165) and a recess (162, 166) matched in terms of shape to this tongue (161, 165), wherein the recess (162, 166) is formed at one plug part (101, 102, 103, 104, 105, 106) of the support (66) and the tongue (161, 165) to be plugged into this recess (162, 166) is formed at a further plug part (101, 102, 103, 104, 105, 106), which in the assembled state is adjacent to the plug part (101, 102, 103, 104, 105, 106) with the tongue (161,165), of the support (66).

5. Escalator (10) or moving walkway (50) according to claim 4, wherein the tongue (161, 165) of at least one plug connection (111, 121, 131) is insertable into the recess (162, 166) only in a single assembly direction.

6. Escalator (10) or moving walkway (50) according to any one of claims 1 to 5, wherein at least one of the plug connections (111, 121, 131) is secured by way of securing means (168) providing a material couple or mechanically positive couple.

7. Escalator (10) or moving walkway (50) according to any one of claims 1 to 6, wherein the support (66) has at least one rail fastening region (71) for fastening of the at least one guide rail (16, 56, 56A, 56B).

8. Escalator (10) or moving walkway (50) according to claim 7, wherein hooks (87) serving for suspension of a guide rail (16, 56, 56A, 56B) are formed in the rail fastening region (71).

9. Escalator (10) or moving walkway (50) according to claim 8, wherein in the assembled state at least one transverse strut (67) is arranged between at least two supports (66) orthogonally to a length direction of the escalator (10) or moving walkway (50) and connects these supports (66) together and the guide rail (16, 56, 56A, 56B) suspended at the support (66) is secured by the transverse strut (67) connected with the support (66).

10. Escalator (10) or moving walkway (50) according to claim 9, wherein the guide rail (16, 56, 56A, 56B) has at least one passage (75) for guidance of the at least one transverse strut (67).

11. Escalator (10) or moving walkway (50) according to any one of claims 1 to 10, wherein the at least one guide rail (16, 56, 56A, 56B) is of C-shaped construction in cross-section and has two guide tracks (76, 77) for guide rollers (74) of a step belt (18) or plate belt (58).

12. Escalator (10) or moving walkway (50) according to any one of claims 1 to 11, wherein the support (66) has at least one of the fastening regions listed below for fastening components of the escalator (10) or moving walkway (50):
- at least one balustrade fastening region (85) for fastening at least one balustrade part (57A, 57B),
- at least one handrail-guide fastening region (91) for fastening a handrail guide (92, 93),
- at least one pedestal fastening region (82) for fastening a skirt panel (45) and
- at least one foot fastening region (68) for fastening the support (66) to a supporting structure (11, 51), which is provided at the building, of a construction.

13. Escalator (10) or moving walkway (50) according to any one of claims 1 to 12, wherein the escalator (10) or moving walkway (50) comprises at least one track module (70), which track module (70) is formed from at least two support structures (55) and at least one guide rail (16, 56, 56A, 56B) and each support structure (55) includes two supports (66) connected with a transverse strut (67), wherein the at least one guide rail (16, 56, 56A, 56B) is arranged in the track module (70) orthogonally to the transverse struts (67) of the support structures (55) and is fastened to the rail fastening regions (71) of the support structures (55) and in the installed state one or more track modules (70) are arranged between the deflecting regions (13, 14, 53, 54) and the deflecting regions (13, 14, 53, 54) are connected together by the at least one track module (70).

14. Escalator (10) or moving walkway (50) according to any one of claims 1 to 13, wherein the first deflecting region (13, 53), the second deflecting region (14, 54) and at least one support (66) are fastened to associated mounts (12, 52), which mounts (12, 52) are arranged in distribution over the length of a load-bearing structure (11, 51) provided at the building and the at least one guide rail (16, 56, 56A, 56B) arranged between the deflecting regions (13, 14, 53, 54) is fastened to the at least one support (66).

15. Method of producing and assembling a support (66) of an escalator (10) or moving walkway (50) according to any one of claims 1 to 14, **characterised by** the steps:
- the plug parts (101, 102, 103, 104, 105, 106) required for producing the support base body (100) are cut out from a flat metal sheet or a plate, wherein recesses (162, 166) and tongues (161, 165) of the plug connections (111, 121, 131) at a plug part (101, 102, 103, 104, 105, 106) are formed by the cutting-out at the plug part (101, 102, 103, 104, 105, 106);
- insofar as required the plug parts (101, 102, 103, 104, 105, 106) of the support base body (100) are bent or shaped at intended locations;
- the plug parts (101, 102, 103, 104, 105, 106) of the support base body (100) are plugged together by means of the plug connections (111, 121, 131), which are formed thereat, to form a box-shaped support base body (100);
- the support base body (100) is optionally provided with a surface treatment and
- further components for completing the support (66) are optionally fastened to the support base body (100).

16. Method of producing and assembling a support (66) according to claim 15, wherein at least one of the plug connections (111, 121, 131) is secured by way of securing means (168) providing a material couple or mechanically positive couple.

17. Method of modernising an escalator (10) or moving walkway (50), wherein an existing escalator or existing moving walkway is removed down to the framework, **characterised by** the steps:
- the emptied framework serving as load-bearing structure (11, 51) is provided in the region of its lower chord with mounts (12, 52) to which the supports (66) of an escalator (10) or moving walkway (50) according to any one of claims 1 to 14 can be fastened and
- a first deflecting region (13, 53), a second deflecting region (14, 54) and at least one support (66) of an escalator (10) or a moving walkway (50) according to any one of claims 1 to 14 are fastened in the emptied framework provided with mounts (12, 52), wherein the supports (66) are connected with the mounts (12, 52).

## Revendications

1. Escalier roulant (10) doté d'une bande à marches (18) ou trottoir roulant (50) doté d'une bande à palettes (58), ayant une première zone de renvoi (13, 53) et une deuxième zone de renvoi (14, 54), étant précisé que la bande à palettes (58) ou la bande à marches (18) est disposée de manière à circuler entre la première zone de renvoi (13, 53) et la deuxième zone de renvoi (14, 54), et l'escalier roulant (10) ou le trottoir roulant (50) comporte au moins un rail de roulement (16, 56, 56A, 56B) disposé entre les zones de renvoi (13, 14, 53, 54) et destiné au guidage de la bande à marches (18) ou de la bande à palettes (58), et au moins un support (66) disposé entre les zones de renvoi (13, 14, 53, 54) et destiné à supporter l'au moins un rail de roulement (16, 56, 56A, 56B), **caractérisé en ce que** l'au moins un support (66) comporte plusieurs pièces de raccordement (101, 102, 103, 104, 105, 106) qui, à l'état monté, peuvent être emboîtées au moyen de connecteurs (111, 121, 131) pour former un corps de base de support (100) en forme de boîte.

2. Escalier roulant (10) ou trottoir roulant (50) selon la revendication 1, étant précisé que les pièces de raccordement (101, 102, 103, 104, 105, 106) sont des éléments de tôle ou des éléments formant plaque.

3. Escalier roulant (10) ou trottoir roulant (50) selon la revendication 1 ou 2, étant précisé qu'au moins deux connecteurs (111, 121, 131) sont prévus entre deux pièces de raccordement (101, 102, 103, 104, 105, 106) adjacentes à assembler.

4. Escalier roulant (10) ou trottoir roulant (50) selon l'une des revendications 1 à 3, étant précisé que chacun des connecteurs (111, 121, 131) comporte une languette (161, 165) et un évidement (162, 166) en complémentarité de forme avec cette languette (161, 165), que l'évidement (162, 166) est formé au niveau d'une pièce de raccordement (101, 102, 103, 104, 105, 106) du support (66) et que la languette (161, 165) à insérer dans cet évidement (162, 166) est formée au niveau d'une autre pièce de raccordement (101, 102, 103, 104, 105, 106) du support (66) adjacente, à l'état monté, à la pièce de raccordement (101, 102, 103, 104, 105, 106) comportant la languette (161, 165).

5. Escalier roulant (10) ou trottoir roulant (50) selon la revendication 4, étant précisé que la languette (161, 165) d'au moins un connecteur (111, 121, 131) n'est insérable dans l'évidement que dans un seul sens de montage (162, 166).

6. Escalier mécanique (10) ou trottoir roulant (50) selon l'une des revendications 1 à 5, étant précisé qu'au moins un des connecteurs (111, 121, 131) est bloqué par un moyen de blocage (168) par liaison de matière ou par complémentarité de formes.

7. Escalier roulant (10) ou trottoir roulant (50) selon l'une des revendications 1 à 6, étant précisé que le support (66) comporte au moins une zone de fixation de rail (71) destinée à la fixation de l'au moins un rail de roulement (16, 56, 56A, 56B).

8. Escalier roulant (10) ou trottoir roulant (50) selon la revendication 7, étant précisé que des crochets (87) sont formés dans la zone de fixation de rail (71), lesquels crochets servent à accrocher un rail de roulement (16, 56, 56A, 56B).

9. Escalier roulant (10) ou trottoir roulant (50) selon la revendication 8, étant précisé que, à l'état monté, au moins une traverse (67) est disposée entre au moins deux supports (66) perpendiculairement à l'extension longitudinale de l'escalier roulant (10) ou du trottoir roulant (50), et ces supports (66) sont reliés l'un à l'autre et le rail de roulement (16, 56, 56A, 56B) accroché au support (66) est bloqué par la traverse (67) reliée au support (66).

10. Escalier roulant (10) ou trottoir roulant (50) selon la revendication 9, étant précisé que le rail de roulement (16, 56, 56A, 56B) comporte au moins une ouverture (75) destiné au passage de l'au moins une traverse (67).

11. Escalier roulant (10) ou trottoir roulant (50) selon l'une des revendications 1 à 10, étant précisé que l'au moins un rail de roulement (16, 56, 56A, 56B) présente une section transversale en forme de C et comporte deux chemins de roulement (76, 77) destinés à des galets de roulement (74) d'une bande à marches (18) ou d'une bande à palettes (58).

12. Escalier roulant (10) ou trottoir roulant (50) selon l'une des revendications 1 à 11, étant précisé que le support (66) comporte au moins une des zones de fixation, indiquées ci-après, destinée à la fixation de composants de l'escalier roulant (10) ou du trottoir roulant (50) :
• au moins une zone de fixation de balustrade (85) destinée à la fixation d'au moins un élément de balustrade (57A, 57B),
• au moins une zone de fixation de main courante (91) destinée à la fixation d'une main courante (92, 93),
• au moins une zone de fixation d'embase (82) destinée à la fixation d'une embase en tôle (45), ou
• au moins une zone de fixation de base (68) destinée à la fixation du support (66) à une structure porteuse (11, 51), érigée côté construction, d'un édifice.

13. Escalier roulant (10) ou trottoir roulant (50) selon l'une des revendications 1 à 12, étant précisé que l'escalier roulant (10) ou le trottoir roulant (50) comporte au moins un module de voie de roulement (70), lequel module de voie de roulement (70) est formé d'au moins deux structures de support (55) et d'au moins un rail de roulement (16, 56, 56A, 56B), et chaque structure de support (55) contient deux supports (66) reliés par une traverse (67), étant précisé que l'au moins un rail de roulement (16, 56, 56A, 56B) est disposé dans le module de voie de roulement (70) perpendiculairement aux traverses (67) des structures de support (55) et est fixé au niveau des zones de fixation de rail (71) des structures de support (55) et, à l'état monté, un ou plusieurs modules de voie de roulement (70) sont disposés entre les zones de renvoi (13, 14, 53, 54), et les zones de renvoi (13, 14, 53, 54) sont reliées entre elles par l'au moins un module de voie de roulement (70).

14. Escalier roulant (10) ou trottoir roulant (50) selon l'une des revendications 1 à 13, étant précisé que la première zone de renvoi (13, 53), la deuxième zone de renvoi (14, 54) et au moins un support (66) sont fixés à des logements associés (12, 52), lesquels logements (12, 52) sont répartis sur l'extension longitudinale d'une structure porteuse (11, 51) érigée côté construction et l'au moins un rail de roulement (16, 56, 56A, 56B), disposé entre les zones de renvoi (13, 14, 53, 54), est fixé à l'au moins un support (66).

15. Procédé de fabrication et de montage d'un support (66) d'un escalier roulant (10) ou d'un trottoir roulant (50) selon l'une des revendications 1 à 14, **caractérisé par** les étapes selon lesquelles
• les pièces de raccordement (101, 102, 103, 104, 105, 106) nécessaires à la fabrication du corps de base de support (100) sont découpées dans une tôle plate ou une plaque, étant précisé que des évidements (162, 166) et languettes (161, 165) des connecteurs (111, 121, 131) d'une pièce de raccordement (101, 102, 103, 104, 105, 106) sont formés par découpage de la pièce de raccordement (101, 102, 103, 104, 105, 106) ;
• les pièces de raccordement (101, 102, 103, 104, 105, 106) du corps de base de support (100) sont pliées ou mises en forme à des emplacements prévus,
• les pièces de raccordement (101, 102, 103, 104, 105, 106) du corps de base de support (100) sont assemblées au moyen des connecteurs (111, 121, 131) formés sur celles-ci pour former un corps de base de support (100) en forme de boîte,
• le corps de base de support (100) est doté le cas échéant d'un traitement de surface, et
• d'autres composants sont fixés le cas échéant au corps de base de support (100) pour compléter le support (66).

16. Procédé de fabrication et de montage d'un support (66) selon la revendication 15, étant précisé qu'au moins un des connecteurs (111, 121, 131) est bloqué par un moyen de blocage (168) par complémentarité de formes ou par liaison de matière.

17. Procédé de modernisation d'un escalier roulant (10) ou d'un trottoir roulant, (50), étant précisé qu'un escalier roulant existant ou un trottoir roulant existant est dégagé jusqu'à l'ossature, **caractérisé par** les étapes selon lesquelles,
• l'ossature dégagée qui sert de structure porteuse (11, 51) est pourvue dans la zone de sa membrure inférieure de logements (12, 52) auxquels peuvent être fixés les supports (66) d'un escalier roulant (10) ou d'un trottoir roulant (50) selon une des revendications 1 à 14, et
• une première zone de renvoi (13, 53), une deuxième zone de renvoi (14, 54) et au moins un support (66) d'un escalier roulant (10) ou d'un trottoir roulant (50) selon l'une des revendications 1 à 14 sont fixés dans l'ossature dégagée et pourvue de logements (12, 52), étant précisé que les supports (66) sont reliés aux logements (12, 52).
